# EUROPEAN PATENT SPECIFICATION

(11) **EP 2 827 034 B1**
(45) Date of publication and mention of the grant of the patent: **13.09.2017**
(21) Application number: 14175581.9
(22) Date of filing: 03.07.2014
(51) Int. Cl.: F16L 3/26

(54) **Casing**
Gehäuse
Enveloppe

(30) Priority: 05.07.2013 FI 20135747
(43) Date of publication of application: 21.01.2015
(73) Proprietor: PS Products Oy, 66530 Koivulahti (FI)
(72) Inventor: Öman, Peter, 66530 Koivulahti (FI); Björkman, Simon, 66530 Koivulahti (FI)
(74) Representative: Kolster Oy Ab

(56) References cited:
- EP-A1- 0 696 097
- EP-A1- 0 893 638
- EP-A2- 1 643 177
- DE-U1- 8 710 777
- GB-A- 2 204 745
- US-A1- 2011 031 011

## Description

### Background of the invention

The invention relates to a casing intended for installing at least one pipe carrying a liquid. Prior art solutions include installing various kind of covering plates to cover pipe installations. The specific problem concerning the prior art solutions is that a covering plate or similar, once installed, is difficult if not impossible to remove when the pipes should be uncovered for servicing, for example.

EP 0893638 discloses a plastic profile which is composed of a rigid, angular base segment, at which further plastic segment are elastically fastened.

EP 0696097 discloses a cable channel profile is made from continuously extruded strip with wall sections connected by flexible hinges.

US 2011/0031011 discloses a raceway for cables and wires. The raceway includes plurality of hinges.

GB 2204745 discloses a trunking comprising an elongate strip which is foldable.

DE 8710777U discloses a foldable cabel channel comprising intermeshing parts which co-operate when the channel is folded.

EP 1643177 discloses a raceway contruction for cables, pipes and like. The construction of the raceway is such that it prevents the cover from being accidentally disengaged.

### Brief description of the invention

The casing according to the invention is an improvement over the prior art technology. The casing according to the invention is easy to open and close. The object of the invention is achieved by a casing which is characterised by what is disclosed in the independent product claim.

The casing according to the invention is used to cover pipe installations. At least one pipe carrying a liquid may be installed in a casing according to the invention. The casing is particularly well-suited for installation in connection with pipe renovation whereby pipes are installed as surface mounting. The use of the casing in connection with new building construction is additionally possible. Inside the casing, water pipes or pipes of a heating system, for example, may run. The pipes may be uninsulated or heat-insulated, depending on the purpose of use. The use of the casing according to the invention is particularly beneficial in places where high demands are placed on hygiene, such as hospitals and the food industry: The pipes may be enclosed by a casing according to the invention, making cleaning easier because it is simpler to clean a uniform surface than a plurality of pipes separately.

The casing according to the invention is easy to install, because pipes are installed inside the casing instead on a wall, as done in prior art applications. The bottom of the casing may have marks for screw installation spots. Further, the casing has holders for the pipes to be fastened in the casing. The holders may be chosen according to the use and installed on site. There will be the minimum of taking measurements and drilling, usually required in installation work, resulting in a lesser amount of drill dust, for example. Consequently, the installation time and inconvenience during it will be minor for all parties.

The casing according to the invention comprises a bottom part and a lid that closes the bottom part. The bottom part comprises a first wall, a second wall, and a third wall. The lid is arranged to be attachable to the edges of the first wall and the third wall. The lid is slightly outward convex, whereby a pretension takes form on it, making it easier to open.

The space bounded by the first, second, and third wall as well as the lid may have different kinds and sizes of holders for the pipes. On the inner surface of the first or second wall, rails or protrusions may have been formed, to which the different kinds of holders are secured. After all, one of the benefits of the invention is that the casing may be equipped according to various needs on site. The size of the casing, too, may be different depending on the purpose of use.

Once the casing is installed in place so that the lid closes the bottom part, the first and third wall are substantially parallel to each other, and the second wall is substantially perpendicular to the first and third wall. There may also be spring-like elements inside the casing, which are secured to the rails/protrusions on the second wall and press the third wall outward whereby the lid will stay firmly in place.

When the casing is opened, the third wall is pressed inward, making the lid detach from the fasteners on the edges of the first and third wall. The lid may be detached altogether for the duration of installation work. The third wall may be turned with respect to the edge secured to the second wall in such a manner that the third wall will be substantially parallel to the second wall. That way, more installation space will be available in the casing.

When the casing is closed anew, the third wall is turned back so that it is substantially parallel to the first wall. The lid is pushed into the holders on the edges of the first and third walls, whereby the casing is closed.

Because pipes travel according to the shape of the installation site, the casing further includes extension, end, and corner pieces to achieve a presentable installation outcome. The aforementioned pieces have a major impact on savings in the installation time, because the pieces in question cover the sawn edges whereby the dimensions of the bottom part and the lid need not be entirely precise.

The casing is advantageously manufactured of a plastic material, such as polyvinyl chloride (PVC). The bottom part and lid may be made by extrusion, whereby the walls of the bottom part are formed in one go, and no separate work phases are needed to join them together. As finished products, the bottom part and lid are cut-to-size elongated elements. In order for the third wall to be turnable in the desired way, the wall thickness is reduced in the connecting area of the second and third walls. The wall thickness in said connecting area may be, for example, 20 - 60 %, advantageously 50 - 60 %, of the thickness used in other parts of the casing. In addition, raw material mixed in another way may be used in the connecting area, ingredients that increase elasticity may have been added in the plastic material for said connecting area, or the connecting area is made of a different plastic material than the rest of the bottom part.

The holders or similar, incorporated inside the casing, are usually made by die casting.

The invention is now described in more detail in connection with the preferred embodiments and with reference to the accompanying drawings, of which:
Figure 1 shows a cross-section of a casing equipped with different kind of holders;
Figure 2 shows a cross-section of the bottom part of the casing.

### Detailed description of the invention

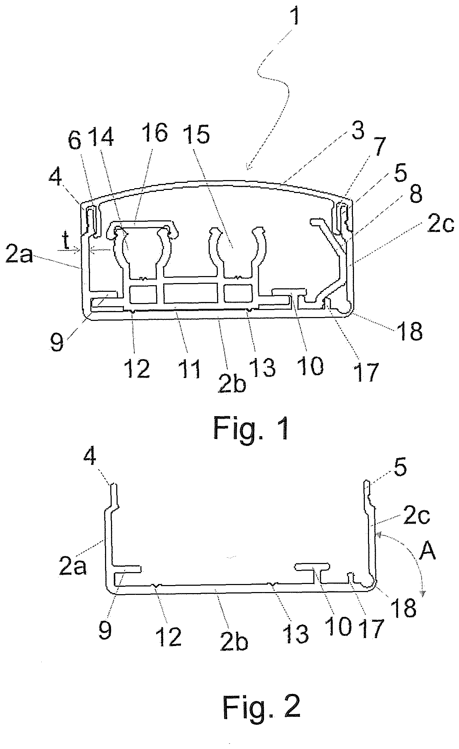

Figure 1 shows a cross-section view of a casing 1 according to the invention and provided with holders, in a position with the casing 1 closed. The casing 1 comprises a bottom part 2 and a lid 3. The bottom part 2 comprises a first wall 2a, a second wall 2b, and a third wall 2c. The first wall 2a is substantially parallel to the wall 2c, and the wall 2b is essentially perpendicular to the first wall 2a and the third wall 2c when the bottom part is closed with the lid 3. A fastener 4 has been formed on the edge of the first wall 2a, and a fastener 5 has been formed on the edge of the third wall, these fasteners meshing with fasteners 6, 7 on the lid. As shown by Figure1, the fasteners 4, 5 have a groove in which the ridge in the fasteners 6, 7 fits.

Inside the casing 1 there may be, as in Figure 1, a spring-like element 8, which presses the inner surface of the third wall 2c so that the lid 3 is kept firmly in place. On the surfaces of the casing walls, protrusions or rails 9, 10, 17 have been formed, to which pipe holders 11 may be fastened. To facilitate the securing of the holders 11, there may be grooves 12, 13 on the inner surface of the second wall, with the holders 11 having ridges that match their shape. In the arrangement according to Figure1, pipes are installed in the holders 11 at positions 14, 15. To make sure the pipe stays in place, the holder 11 may have a securing element 16. Holders 11 are usually placed successively at suitable intervals in the longitudinal direction of the casing, in other words, in the direction that the pipes go.

In Figure 1, the normal thickness of the wall is denoted by the letter t. In the connecting area 18, the material thickness is substantially smaller than elsewhere. In the connecting area 18, the material thickness may be 20 - 60 % of the normal thickness t of the material, in the case of Figure 1, the thickness is 50 - 60 % of the thickness t.

The aforementioned parts may be manufactured of a suitable plastic material, such as polyvinyl chloride (PVC). The casing may be made in different sizes and colours. The holders to be placed inside the casing are selected according to the application. The lid 3 and the bottom part may be made by extrusion, the holders and other similar parts may be made by die casting.

When installation work is to be carried out inside the casing, the wall 2c is pressed inward whereby the lid comes loose off the fasteners 4, 5. After this, the wall 2c may be turned, as described in connection with Figure 2.

Figure 2 shows the bottom part as a cross section view without the lid or holders, or similar, placed inside. The double-ended arrow A illustrates the option to turn the third wall 2c. When the lid 3 is open, the third wall can be turned around the connecting area 18 so that the third wall 2c is substantially parallel to the second wall 2b. When the lid 3 is off and the third wall 2c has been turned, installation and repair work is easy to carry out. In practice, the third wall 2c may turn even more than 90°, but when the first wall 2a is against a ceiling and the second wall 2b against a building wall, the turning is limited by the plane of the building wall.

It will be apparent to a person skilled in the art that as technology advances, the basic idea of the invention may be implemented in many different ways. The option to turn the third wall may be implemented by hinges or similar means. The material may also be of another plastic material than polyvinyl chloride and it is possible that the casing and the holders are made of different materials. The invention and its embodiments are thus not restricted to the above examples but may vary within the scope of the claims.

## Claims

1. A casing (1) intended for the installation of at least one pipe carrying a liquid, the casing (1) comprising
- a bottom part comprising, joined together, a first wall (2a), second wall (2b) and third wall (2c), a slightly outward convex lid (3) that closes the bottom part, the lid (3) being fastenable to the edges of the first wall (2a) and the third wall (2c), **characterised in that** the third wall (2c) is turnable in relation to that edge of the second wall (2b) to which the third wall (2c) is fastened by a connecting area (18) whose material thickness is 20 - 60 % of the thickness (t) of the first, second, and third walls (2a, 2b, 2c).

2. A casing as claimed in claim 1, **characterised in that** the first wall (2a) and the third wall (2c) of the bottom part are substantially parallel when the bottom part is closed by the lid (3).

3. A casing as claimed in claim 1 or 2, **characterised in that** the third wall (2c) of the bottom part is turnable to be substantially parallel to the second wall (2b) when the lid (3) is open.

4. The use of a casing as claimed in claim1 for pipe renovation.

5. The use of a casing as claimed in claim1 for installing pipes in new buildings.

## Patentansprüche

1. Gehäuse (1), das zur Installation wenigstens eines Rohrs, das eine Flüssigkeit befördert, bestimmt ist, wobei das Gehäuse (1) Folgendes umfasst:
- einen Bodenteil, der eine erste Wand (2a), eine zweite Wand (2b) und eine dritte Wand (2c), die miteinander verbunden sind, umfasst, einen geringfügig auswärts konvexen Deckel (3), der den Bodenteil verschließt, wobei der Deckel (3) an den Kanten der ersten Wand (2a) und der dritten Wand (2c) befestigbar ist, **dadurch gekennzeichnet, dass** die dritte Wand (2c) in Bezug auf jene Kante der zweiten Wand (2b), an der die dritte Wand (2c) durch einen Verbindungsbereich (18) mit einer Materialdicke von 20 bis 60 % der Dicke (t) der ersten, zweiten und dritten Wand (2a, 2b, 2c) befestigt ist, drehbar ist.

2. Gehäuse nach Anspruch 1, **dadurch gekennzeichnet, dass** die erste Wand (2a) und die dritte Wand (2c) des Bodenteils im Wesentlichen parallel verlaufen, wenn der Bodenteil durch den Deckel (3) verschlossen ist.

3. Gehäuse nach Anspruch 1 oder 2, **dadurch gekennzeichnet, dass** die dritte Wand (2c) des Bodenteils so drehbar ist, dass sie im Wesentlichen parallel zu der zweiten Wand (2b) verläuft, wenn der Deckel (3) offen ist.

4. Verwendung eines Gehäuses nach Anspruch 1 zur Rohrsanierung.

5. Verwendung eines Gehäuses nach Anspruch 1 zur Installation von Rohren in neuen Gebäuden.

## Revendications

1. Enveloppe (1) destinée à l'installation d'au moins un tuyau acheminant un liquide, l'enveloppe (1) comprenant :
- une partie de fond comprenant, jointes conjointement, une première paroi (2a), une deuxième paroi (2b) et une troisième paroi (2c), un couvercle (3) légèrement convexe vers l'extérieur qui ferme la partie de fond, le couvercle (3) pouvant être fixé aux bords de la première paroi (2a) et de la troisième paroi (2c), **caractérisée en ce que** la troisième paroi (2c) peut tourner par rapport au bord de la deuxième paroi (2b) auquel la troisième paroi (2c) est fixée par une zone de raccordement (18) dont l'épaisseur de matériau est de 20 à 60 % l'épaisseur (t) de la première, de la deuxième et de la troisième paroi (2a, 2b, 2c).

2. Enveloppe selon la revendication 1, **caractérisée en ce que** la première paroi (2a) et la troisième paroi (2c) de la partie de fond sont sensiblement parallèles lorsque la partie de fond est fermée par le couvercle (3).

3. Enveloppe selon la revendication 1 ou 2, **caractérisée en ce que** la troisième paroi (2c) de la partie de fond peut tourner pour être sensiblement parallèle à la deuxième paroi (2b) lorsque le couvercle (3) est ouvert.

4. Utilisation d'une enveloppe selon la revendication 1 pour la rénovation de tuyaux.

5. Utilisation d'une enveloppe selon la revendication 1 pour installer des tuyaux dans de nouveaux édifices.
